# EUROPEAN PATENT APPLICATION

(11) **EP 4 350 828 A1**
(43) Date of publication of application: **10.04.2024**
(21) Application number: 22200015.0
(22) Date of filing: 06.10.2022
(51) Int. Cl.: H01M 10/052, H01M 10/0562, C01G 25/00, C04B 35/48, H01M 10/0585

(54) **METHOD FOR PRODUCING A MULTILAYER SOLID STATE ELECTROLYTE AND MULTILAYER SOLID STATE ELECTROLYTES**

(71) Applicant: Belenos Clean Power Holding AG, 2502 Bienne (CH)
(72) Inventor: ZHANG, Huanyu, 8032 Zürich (CH); KRAVCHYK, Kostiantyn, 8052 Zürich (CH); PFENNINGER, Reto, 4612 Wangen bei Olten (CH); KOVALENKO, Maksym, 8050 Zürich (CH)
(74) Representative: ICB SA

(57) **Abstract**

The present invention discloses a method for producing a multilayer solid state electrolyte (SSE) comprising alternating dense layers and porous layers, wherein the number of layers is at least two, the method comprising: addint a first compound comprising one or more of an alkali metal and/or an alkaline earth metal and a first binder to a first solvent, thereby obtaining a first mixture; adding a second compound comprising one or more of an alkali metal and/or an alkaline earth metal, a second binder, and a pore-forming compound to a second solvent, thereby obtaining a second mixture; film-casting the first mixture and the second mixture on a substrate until the number of layers is obtained, thereby obtaining a green (multilayer) structure; debinding and sintering the green (multilayer) structure, thereby obtaining the multilayer SSE. The invention further discloses a multilayer SSE obtained by methods of the invention, and a solid state battery comprising such a SSE.

## Description

### Technical field of the invention

The present invention relates to method for producing multilayer solid state electrolytes comprising alternating dense layers and porous layers, to multilayer solid state electrolytes comprising alternating dense layers and porous layers, and to solid state batteries comprising such multilayer solid state electrolytes.

### Background

Solid state batteries, in particular lithium metal solid state batteries (SSBs) are nowadays considered to be a promising, non-toxic and safer alternative to Li-ion batteries comprising a liquid electrolyte. However, today, the performance of the solid state electrolytes (SSEs) used in such SSBs seems not to be sufficient to meet the commercial requirements.

SSEs based on lithium garnets, in particular Li₇La₃Zr₂O₁₂ (lithium lanthanum zirconium oxide, abbreviated as LLZO), have gained interest as a compelling approach to improve one or more of the energy density, the cycling stability, and the safety of Li-ion batteries. However, even these SSEs do not yet meet the commercial requirements. Lithium metal anodes combined with dense LLZO ceramics are characterized by low cycling stability at current densities of >0.5 mA/cm² and areal capacities of >0.5 mAh/cm². Under these electrochemical conditions, the electrodeposited lithium penetrates rapidly into the LLZO solid state electrolyte, forming lithium dendrites that eventually short-circuit the cell.

In order to reduce the formation of lithium dendrites, bilayer dense/porous LLZO structures and tri-layer porous/dense/porous LLZO structures have recently been developed. These structures allow to mitigate dynamic volume changes of the lithium anode and the formation of voids, both of which are assumed to be major causes of formation of lithium dendrites. Further, lithium can be stored in the pores of the LLZO scaffold during lithium deposition, thereby avoiding dynamic changes in cell volume. Further, the formation of voids during stripping can be mitigated by the larger surface area of the LLZO/lithium interface in the scaffold compared to dense LLZO ceramics. Also, it is assumed that the dense layer can act as an additional protective layer which reduces the risk of potential short circuits during cell charging.

'High-rate lithium cycling in a scalable trilayer Li-garnet-electrolyte architecture', G. T. Hitz, D. W. McOwen, et al., Materials Today, volume 22 (2019), pages 50-57 discloses a trilayer porous/dense/porous solid state electrolyte comprising a doped LLZO ceramic lithium conductor. The SSE is obtained by separately tape-casting the dense layer from a first slurry and the porous layers from a second and a third slurry, thereby obtaining three separate layers. The layers are then laminated to each other by hot pressing at 1.17 MPa and 60 °C for 15 minutes, followed by debinding and sintering.

US2022/0093904 discloses a method to produce a bilayer dense/porous SSE comprising the steps of preparing a first slurry comprising LLZO and a binder in a solvent, and a second slurry comprising LLZO, a binder and poly(methyl methacrylate) (PMMA) in a solvent. The first slurry is tape-casted, thereby obtaining a dense layer. The second slurry is then tape-casted on the dense layer, thereby obtaining a porous layer. Next, the entire green structure is immersed in lithium saturated water to induce a phase inversion to remove the solvents. The resulting structure is then dried and sintered to remove the PMMA and any binders. Alternatively, both layers can be tape-casted separately and then laminated together, followed by sintering.

One of the disadvantages of the foregoing methods is that the resulting bilayer or trilayer SSEs show significant delamination between the layers. Another disadvantage is the difficulty of the obtained SSEs to remain flat. Further, the obtained SSEs show in some cases a depletion of the metal, such as the alkali metal (e.g. lithium) or the alkaline earth metal (e.g. magnesium) in LLZO.

### Summary of the invention

The present invention aims to overcome one or more of the above drawbacks. It is an aim of the invention to provide a method for producing a multilayer solid state electrolyte (SSE) having a largely reduced delamination of the layers, i.e. providing an improved interface between the layers. It is a further aim to provide a method for producing a SSE having improved mechanical properties. It is a further aim to provide a method for producing a SSE as a film, in particular a self-standing film, i.e. a film which does not require a support or a carrier.

According to a first aspect of the invention, there is disclosed a method for producing a multilayer solid state electrolyte (SSE) according to the appended claims.

A "multilayer SSE" in the light of the present invention comprises any SSE having at least two layers, such as three, four, five, or more layers. The multilayer solid state electrolyte according to the present disclosure, i.e. obtained by methods of the present disclosure, comprises alternating dense layers and porous layers. For example, when the number of layers is two, the multilayer SSE comprises a dense layer adjacent to a porous layer. For example, when the number of layers is three, the multilayer SSE can comprise a sequence of a dense layer, a porous layer, and a dense layer, or a sequence of a porous layer, a dense layer, and a porous layer.

The method comprises the preparation of a first mixture and a second mixture. The first mixture is obtained by adding a first compound comprising one or more of an alkali metal and/or an alkaline earth metal and a first binder to a first solvent. Advantageously, the first mixture is used for obtaining the dense layer(s) of the multilayer SSE.

The second mixture is obtained by adding a second compound comprising one or more of an alkali metal and/or an alkaline earth metal, a second binder and a pore-forming compound in a second solvent. Advantageously, the second mixture is used for obtaining the porous layer(s) of the multilayer SSE. The pore-forming agent allows to provide layers of the SSE having pores, i.e. porous layers. Advantageously, the composition and the amount of the pore-forming agent allows to control the degree of porosity of the obtained layer and/or the size of the pores.

Advantageously, the second mixture comprises between 20 vol.% and 90 vol.% of the pore-forming compound, preferably between 30 vol.% and 80 vol%, more preferably between 50 vol.% and 75 vol.%.

The first and second compound comprising one or more of an alkali metal and/or an alkaline earth metal can be different or the same. Advantageously, the first and/or second compound comprising one or more of an alkali metal and/or an alkaline earth metal comprises an alkali metal. Advantageously, the alkali metal comprises one or more of lithium, sodium or potassium. Advantageously, when the first and/or second compound comprising one or more of an alkali metal and/or an alkaline earth metal comprises lithium, the lithium is present as a lithium garnet-type structure. In other words, the first and/or second compound comprising one or more of an alkali metal and/or an alkaline earth metal advantageously comprises a lithium garnet-type structure. Advantageously, the lithium garnet-type structure is lithium lanthanum zirconium oxide (LLZO).

The first and second solvent can be the same or can be different from each other. Advantageously, the first and/or second solvent comprises a polar solvent. Non-limiting examples of suitable polar solvents include isopropanol, 1-propanol, 2-propanol, butanol, ethanol, methanol, acetone, xylene, methyl ethyl ketone, toluene, 1,1,1-trichloroethane, chlorohexane, cyclohexane, and water.

Advantageously, the first and/or second mixture further comprises one or more of a carbonate, an oxide, a tungsten oxide, or a zirconium oxide of the alkali metal and/or the alkaline earth metal comprised in the first and/or second mixture, respectively. Advantageously, when the first and/or second mixture comprises one or more of such a compound, the mixture comprises between 0.1 % and 10 % by weight, of the compound, preferably between 0.5 % and 9 % by weight, more preferably between 1 % and 8 % by weight, such as between 2 % and 7 % by weight, or between 2.5 % and 5 % by weight, based on the total weight of the first and/or the second mixture, respectively.

According to the methods of the invention, the first mixture is film-casted. A green layer is thereby obtained. The second mixture is then film-casted on the green layer, i.e. on the film-casted first mixture. A green structure is thereby obtained.

Film-casting in the present disclosure includes casting methods known in the art, for example tape-casting, screen printing and spray printing. Advantageously, film-casting of the first mixture and/or the second mixture comprises tape-casting of the first mixture and/or the second mixture, respectively. Advantageously, the tape-casting is performed by methods known in the art.

Optionally, and when the number of layers in the multilayer solid state electrolyte to be obtained is three or more, film-casting of the first mixture and the second-mixture is repeated until the number of layers is obtained. For example, when the number of layers is four, the first mixture is advantageously film-casted a second time, on the green structure, followed by film-casting of the second mixture a second time, thereby obtaining a four-layer (i.e. multilayer) green structure.

The green structure, or, when the number of layers is three or more, the green multilayer structure, is debinded, thereby obtaining a debinded multilayer structure comprising alternating dense layers and porous layers. During debinding of the green (multilayer) structure, one or more, and preferably all, of the first and second binder, the first and second solvent and the pore-forming compound are at least partially removed. Advantageously, at least 50 %, preferably at least 75 %, more preferably at least 80 %, for example at least 85 %, at least 90 %, at least 95 %, at least 98 %, or at least 99 % of one or more, and preferably all, of the first and second binder, the first and second solvent and the pore-forming compound are removed.

Advantageously, debinding is performed, or takes place, in an atmosphere comprising at least 20 vol.% oxygen, for example in air or substantially pure oxygen (for example oxygen of industrial grade). Advantageously, the debinding is performed at a temperature between 250 °C and 800 °C, preferably between 400 °C and 700 °C.

The debinded multilayer structure comprising alternating dense layers and porous layers is in a next step sintered. A multilayer solid state electrolyte comprising alternating dense layers and porous layers is obtained.

Advantageously, the sintering is performed, or takes place, in an inert atmosphere, for example in an atmosphere comprising inert gases, such as argon, helium or nitrogen. Advantageously, the sintering is performed in an atmosphere substantially consisting of argon. Advantageously, the sintering is performed at a temperature between 500 °C and 2000 °C, such as between 600 °C and 1500 °C, preferably between 750 °C and 1400 °C, more preferably between 900 °C and 1250 °C.

According to a second aspect of the present invention, there is disclosed a multilayer solid state electrolyte according to the appended claims. Advantageously, the multilayer solid state electrolyte is obtained by methods according to the first aspect of the present disclosure.

The multilayer solid state electrolyte comprises at least two layers, i.e. a dense layer and a porous layer. The multilayer solid state electrolyte can comprise three, four, five, or more layers. The layers are alternating dense layers and porous layers, as explained above. Advantageously, when the number of layers is three, the multilayer SSE has a dense - porous - dense configuration, i.e. a porous layer provided between two dense layers.

The dense layer of the multilayer SSE, or each one of the dense layers when the number of dense layers in the multilayer SSE is two or more, comprises a first compound comprising one or more of an alkali metal and/or an alkaline earth metal. This compound can be the same or can be different for each dense layer.

Advantageously, the porosity of the dense layer(s) is 40 % or lower, preferably 35 % or lower, such as 30 % or lower, as measured by X-ray computed tomography.

The porous layer of the multilayer SSE, or each one of the porous layers when the number of porous layers in the multilayer SSE is two or more, comprises a second compound comprising one or more of an alkali metal and/or an alkaline earth metal. This compound can be the same or can be different for each porous layer.

Advantageously, the porosity of the porous layer(s) is at least 40 %, preferably at least 45 %, such as at least 50 %, at least 55 %, more preferably at least 60 %, for example at least 65 %, at least 70 %, at least 75 %, or at least 80 %, as measured by X-ray computed tomography.

The first and second compound comprising one or more of an alkali metal and/or an alkaline earth metal are advantageously as described above. Advantageously, one or both of the first and second compound comprising one or more of an alkali metal and/or an alkaline earth metal comprises one or more of lithium, sodium or potassium. Advantageously, one or both of the first and second compound comprising one or more of an alkali metal and/or an alkaline earth metal comprises a lithium garnet-type structure, preferably LLZO.

According to a further aspect of the present invention, there is disclosed a solid state battery (SSB) according to the appended claims. The SSB comprises a multilayer SSE according to the present disclosure.

An advantage of the methods according to the invention is that it is possible to control of the stoichiometry of the alkali metal and/or alkaline earth metal in the obtained solid state electrolyte, as well as the microstructure and the thickness of the layers of the SSE, in particular of the porous layer. In other words, it is possible to control the degree of porosity and thickness of both the dense and the porous layer(s). The methods allow to obtain solid state electrolytes having a high ionic conductivity, and a high voltage stability. They also allow to produce solid state batteries having an improved energy density.

An advantage of the solid state electrolytes of the present invention is, besides the high ionic conductivity and the high voltage stability, that they are not toxic and non-flammable, providing a safe SSE. They are further capable to reduce to even inhibit or avoid the formation of dendrites of the alkali metal or alkaline earth metal, in particular lithium, thereby reducing the risk for short-circuiting in the batteries comprising such a SSE, and thus improving their safety.

### Description of figures

Aspects of the invention will now be described in more detail with reference to the appended drawings, wherein same reference numerals illustrate same features.
- Figure 1 schematically discloses process steps of methods of the present disclosure;
- Figure 2 schematically shows a solid state battery cell comprising a bilayer solid state electrolyte according to the invention;
- Figures 3 and 4 show SEM-images of the cross-section of a bilayer dense-porous solid state electrolyte obtained by methods known in the prior art;
- Figures 5 shows a SEM-image of the cross-section of a bilayer dense-porous solid state electrolyte obtained by methods of the present disclosure;
- Figure 6 shows the porosity of a bilayer solid state electrolyte in function of the thickness thereof, as measured by means of X-ray computed tomography;
- Figures 7A-C show SEM-images of the cross-section of porous layers obtained from mixtures comprising different amounts of Li2CO3;
- Figure 8 shows the critical current density measurements for a symmetrical cell;
- Figure 9 shows the voltage profile of a solid state battery cell according to the invention;
- Figure 10 shows the cycling stability measurement of a solid state battery according to the invention as function of the number of cycles;
- Figure 11 shows the critical current density measurement of a Li/LLZO/Li symmetric cell comparing heat-treated cells at different temperatures.

### Detailed description of the invention

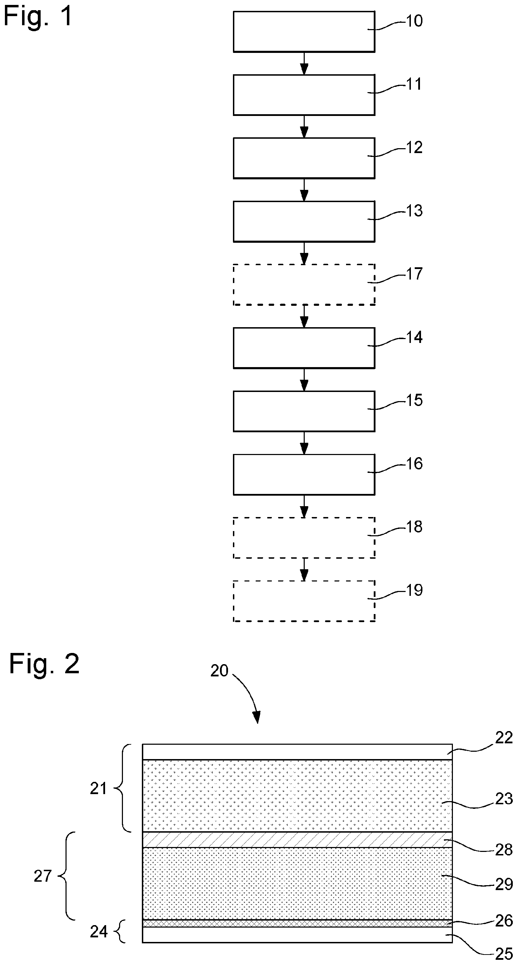

Figure 1 represents schematically process steps of methods for producing a multilayer solid state electrolyte (SSE) according to the present invention.

The method comprises a step 10 of preparing a first mixture. To this end, at least a first compound comprising one or more of an alkali metal and/or an alkaline earth metal and a first binder are added to a first solvent. Advantageously, the first mixture is substantially free from any compound capable of forming pores. Advantageously, the first mixture is capable for or suitable for obtaining dense layer(s) of the multilayer solid state electrolyte.

Advantageously, the first mixture is obtained by mixing the components, for example by ball milling or other techniques known in the art.

The first mixture can be in the form of a slurry, a suspension (i.e. a suspended solution), a solution, or a dispersion.

Advantageously, the first compound comprising one or more of an alkali metal and/or an alkaline earth metal is conducting to the ions of that alkali metal and/or the alkaline earth metal, respectively.

Advantageously, when the first compound comprising one or more of an alkali metal and/or an alkaline earth metal comprises an alkali metal, the alkali metal comprises one or more of lithium, sodium or potassium. Advantageously, when the first compound comprising one or more of an alkali metal and/or an alkaline earth metal comprises an alkaline earth metal, the alkaline earth metal advantageously comprises one or more of magnesium or calcium.

Advantageously, when the first compound comprises an alkali metal comprising lithium, i.e. the first compound comprises lithium, at least a portion of the lithium is present as a lithium garnet-type structure. A particular example of a lithium garnet-type structure is LLZO. Optionally, LLZO can be doped, as is known in the field. Dopants can comprise one or more of aluminium (Al), gallium (Ga), neodymium (Nd), strontium (Sr), chromium (Cr), titanium (Ti), tantalum (Ta), tellurium (Te), niobium (Nb), or tungsten (W). Advantageously, when LLZO is doped, it can be according to formula (I)

Li₇₋ₓαₓLa_{3-y}β_{y}Zr_{2-z}δ_{z}O₁₂ (I)

wherein
α is Al or Ga, β is Nd or Sr, δ is Cr, Ti, Ta, Nb, W or Te,
x is between 0 and 6, y is between 0 and 2, z is between 0 and 1, and
at least one of x, y and z is different from 0.

Alternatively, or additionally, at least a portion of the lithium can be present as Li_{1.3}Al_{0.3}Ti_{1.7}(PO₄)₃ (lithium aluminium titanium phosphate, abbreviated as LATP, CAS number 120479-61-0).

Advantageously, when the first compound comprises an alkali metal comprising sodium, i.e. the first compound comprises sodium, at least a portion of the sodium is present as sodium-beta-alumina. Sodium-beta-alumina is known as a generic term used to describe compositions in the range of Na₂O·11Al₂O₃ (*β*-alumina) to Na₂O·5Al₂O₃ (β"-alumina).

Advantageously, when the first compound comprises an alkali metal comprising sodium, i.e. the first compound comprises sodium, at least a portion of the sodium is present as potassium-beta-alumina. Potassium-beta-alumina is a generic term used to describe compositions known as K-*β-*Al₂O₃ and K-β"-Al₂O₃.

Non-limiting examples of the binder include polyvinylalcohol, polyvinyl butyral, polyvinyl chloride, polyurethane, cellulose acetate-butyrate, polyacrylate esters, polytetrafluoroethylene, polypropylene carbonates, vinyl chloride acetate, methyl cellulose, and ethyl cellulose.

The method further comprises a step 11 of preparing a second mixture. To this end, at least a second compound comprising one or more of an alkali metal and/or an alkaline earth metal, a second binder and a pore-forming compound are added to a second solvent. Advantageously, the second mixture is capable for or suitable for obtaining the porous layer(s) of the multilayer solid state electrolyte.

The second mixture can be obtained by the same means as the first mixture, for example by means of ball milling.

The second mixture can have the same of a different form as the first mixture, and is advantageously in the form of a slurry, a suspension (i.e. a suspended solution), a solution, or a dispersion.

The second compound comprising one or more of an alkali metal and/or an alkaline earth metal is advantageously as described above for the first compound comprising one or more of an alkali metal and/or an alkaline earth metal. The first and second compound comprising one or more of an alkali metal and/or an alkaline earth metal can be the same, e.g. they can both comprise or substantially consist of LLZO, or can be different. In particular, the first and second compound each comprise or substantially consist of LLZO, which may be doped as described above.

The second binder can be according to the first binder as described above. The first and second binder can be the same or different.

The pore-forming agent allows to provide layers of the SSE having pores, i.e. porous layers. Advantageously, the composition and the amount of the pore-forming agent allows to control the degree of porosity of the obtained layer and/or the size of the pores. Advantageously, the second mixture comprises between 20 vol.% and 90 vol.% of the pore-forming compound, preferably between 30 vol.% and 80 vol%, more preferably between 50 vol.% and 75 vol.%.

Non-limiting examples of the pore-forming compound include synthetic organic materials such as polymethyl methacrylate (PMMA), polyvinyl chloride, polystyrene, polyethylene oxide, polyvinyl butyral, PMMA-polyethylene glycol. Advantageously, such synthetic organic materials are in the shape of beads or spheres. Other non-limiting examples of the pore-forming compound include phenolic resins, polymeric gels, cellulose acetate, natural organics such as sucrose, dextrin, starch, water and emulsion oils. A preferred example of the pore-forming compound is PMMA.

Optionally, the first and/or the second mixture can comprise one or more further compound, such as, without being limited thereto, a plasticizer, a dispersant (i.e. a surfactant).

Non-limiting examples of a plasticizer include (poly)propylene glycols, (poly)ethylene glycols, butyl benzyl phthalates, butyl stearate, mixtures of ester phthales, polypropylene carbonates, tricresyl phosphate, and trielhylene glycols.

Non-limiting examples of a dispersant include polyvinyl butyral, phosphate esters, ethoylate, aliphatic hydrocarbons, linoleic acid, polyisobutylene, polyethylene glycol, sodium sulfosuccinate, and 2-amino-2-methyl-1-propanol.

Optionally, and advantageously, the first and/or second mixture can further comprise one or more of a carbonate, an oxide, a tungsten oxide, or a zirconium oxide of the alkali metal and/or the alkaline earth metal comprised in the first and/or second mixture, respectively. A particular example of such a compound is an alkali metal carbonate or an alkaline earth metal carbonate. For example, when the mixture comprises lithium, the mixture can comprise lithium carbonate (Li₂CO₃).

Advantageously, when the first and/or second mixture comprises one or more of such a compound, the compound is present in an amount between 0.1 % and 10 % by weight, preferably between 0.5 % and 9 % by weight, more preferably between 1 % and 8 % by weight, such as between 2 % and 7 % by weight, for example between 2.5 % and 5 % by weight, based on the total weight of the first and/or the second mixture, respectively.

The inventors have surprisingly discovered that by adding such a compound to one or both of the first and second mixture, the compounds acts as an additional source of the alkali metal or alkaline earth metal. In particular, the addition of such a compound allows to obtain a solid state electrolyte having a favourable microstructure.

In particular when the alkali metal in the first and second mixture comprises LLZO, the inventors surprisingly discovered that the addition of such a compound, in particular Li₂CO₃, allowed to obtain a multilayer SSE after sintering comprising substantially impurity-free LLZO in its cubic phase.

It is believed that during debinding and sintering a loss of lithium occurs, leading to the conversion of a portion of LLZO to La₂Zr₂O₇ (LZO). Consequently, the addition of such an above-mentioned compound in the first and/or the second mixture, allows to convert the LZO formed during debinding back into LLZO during sintering. The addition of such a compound further provides cubic phase LLZO present in the SSE after sintering, which is the preferred phase for LLZO for use as electrolyte, contrary to tetragonal phase LLZO, as cubic phase LLZO has a higher ionic conductivity. It is known that cubic phase LLZO typically has an ionic conductivity at room temperature of between about 10⁻⁴ S/cm and 10⁻³ S/cm, whereas tetragonal phase LLZO typically has an ionic conductivity at room temperature of about 10⁻⁶ S/cm.

The first mixture and the second mixture are film-casted in a sequential way, i.e. by means of sequential film-casting. The sequential film-casting comprises film-casting 12 the first mixture, followed by film-casting 13 the second mixture on top of the film-casted first mixture. Upon sequential film-casting, a (multilayer) green structure is obtained.

Advantageously, the first tape-casting step, i.e. the (first, if the required number of layers is more than two) tape-casting step of the first mixture is performed onto a substrate or a carrier material. The substrate can be any substrate known in the field of film-casting, including, without being limited thereto, glass, a substrate consisting of polytetrafluoroethylene (PTFE) or comprising a layer of PTFE on a surface, or an alumina substrate. Advantageously, the substrate is inert to the first mixture, i.e. the first mixture will not bind with or react with the substrate.

Advantageously, the film-casting comprises or substantially consists of tape-casting. Advantageously, at least one, and preferably all, of the film-casting step(s) of the first mixture and the film-casting step(s) of the second mixture are performed by means of tape-casting. Advantageously, the tape-casting is performed using methods and apparatuses known in the art. Advantageously, the first tape-casting step, i.e. the (first, if the required number of layers is more than two) tape-casting step of the first mixture is performed onto a substrate or a carrier material as described hereinabove.

When the number of layers required or wanted (i.e. the pre-set number of layers) is more than two, the steps of tape-casting the first mixture 12 and the second mixture 13 are advantageously repeated until the pre-set number of layers is reached. For example, when the number of layers is three, a second step of tape-casting 12 the first mixture is advantageously performed after the tape-casting 13 of the second mixture.

Optionally, and when the (multilayer) green structure is film-casted onto a substrate, the (multilayer) green structure is dried 17 prior to removing 14 the, optionally dried, (multilayer) green structure from the substrate. The drying can be performed at atmospheric pressure or at reduced pressure. The drying can be performed at a temperature between room temperature and 100 °C. The drying can be performed in the open air. Upon drying, a first portion of the first solvent and the second solvent can be removed.

When the film-casting of the first mixture is performed onto a substrate, the green body is removed 14 from the substrate after film-casting 12, 13, or after the optional drying 17 of the (multilayer) green body. Removing the green body from the substrate can be performed by means of methods known in the art, for example by peeling.

The (multilayer) green body is then debinded 15 or calcined. Debinding 15 or calcination removes at least partially one or more of the organic components comprised within the green body. In particular, during debinding 15 the first and second solvent, the first and second binder, and the pore-forming compound are at least partially, and preferably entirely, removed. Upon removal of the pore-forming compound, pores are obtained in the layers of the green body realised by film-casting the second mixture. Consequently, debinding 15 the green body results in a debinded multilayer structure comprising alternating dense layers and porous layers.

Advantageously, debinding is performed, or takes place, in an atmosphere comprising at least 20 vol.% oxygen, for example in air or substantially pure oxygen (for example oxygen of industrial grade).

Advantageously, the debinding is performed at a temperature between 250 °C and 800 °C, preferably between 300 °C and 750 °C, more preferably between 400 °C and 700 °C, such as between 500 °C and 650 °C, for example about 600 °C.

Next, the debinded multilayer structure is sintered 16. During sintering 16, the multilayer structure is densified by merging of the particles, and a multilayer solid state electrolyte comprising alternating dense layers and porous layers is obtained. The sintering can be performed by placing the debinded multilayer structure on a support and placing the support in a sintering apparatus or sintering environment. The support is made of or realised in a material, or a combination of materials, that is capable to withstand the temperature at which the sintering is carried out. For example, the support can comprise or substantially consist of a carbon-comprising component.

Advantageously, the sintering is performed, or takes place, in an inert atmosphere, for example in an atmosphere comprising or substantially consisting of an inert gas, such as argon, helium or nitrogen, or combinations of any two or more thereof. Advantageously, the sintering is performed in an atmosphere substantially consisting of argon.

"Substantially consisting of an inert gas" means in the light of the present invention that the atmosphere comprises at least 98 vol.% inert gas, preferably at least 99 vol.%, more preferably at least 99.5 vol.%.

Advantageously, the sintering is performed at a temperature between 500 °C and 2000 °C, such as between 600 °C and 1500 °C, preferably between 750 °C and 1400 °C, more preferably between 900 °C and 1250 °C, for example at about 1100 °C.

Advantageously, the multilayer SSE after sintering has sufficient mechanical strength which allows the multilayer SSE to be handled without the need to place it on a carrier or a support to avoid damage, such as cracks. Handling of the multilayer SSE includes transporting the multilayer SSE, storing the multilayer SSE, and manufacturing of solid state battery cells comprising the multilayer SSE. Advantageously, the multilayer solid state electrolyte has the shape of a film, in particular a so-called self-supporting or self-standing film, i.e. a film that has sufficient mechanical strength to exclude the need for a carrier or a support onto which the film is placed to avoid damage thereto.

Optionally, the multilayer SSE can further be exposed 18 to an atmosphere comprising at least 20 vol.% oxygen, for example air or substantially pure oxygen (for example oxygen of industrial grade). This further step 18, similar to the debinding 15, allows to remove any carbon-containing residue present in and/or on the multilayer SSE. For example, during sintering on a carbon-comprising support, it is possible that some residue from the support is deposited on or into the SSE.

Advantageously, the exposure step 18 is performed at a temperature between 250 °C and 800 °C, preferably between 300 °C and 750 °C, more preferably between 400 °C and 700 °C, such as between 450 °C and 650 °C, for example about 600 °C.

Advantageously, the exposure step 18 is performed for a period of time between 1 minute and 1 hour, such as between 2 minutes and 45 minutes, preferably between 5 minutes and 30 minutes, more preferably between 10 minutes and 20 minutes, such as about 15 minutes.

Optionally, the multilayer SSE can be annealed 19 after sintering 16 or after the optional exposure 18, if performed. An annealing step 19 is in particular advantageously performed when an exposure step 18 is performed on the multilayer SSE, because carbonates and/or hydroxides of the alkali metal or the alkaline earth metal present in the multilayer SSE can be formed during the exposure step 18. The annealing allows to remove any carbon-comprising residues, hydroxides and carbonates present in and/or on the multilayer SSE. In other words, the annealing 19 can be seen as a cleaning step of the SSE, for example prior to its assembly into a battery cell.

Advantageously, the annealing 19 is performed in an inert atmosphere, for example in an atmosphere comprising or substantially consisting of an inert gas, such as argon, helium or nitrogen, or a combination of any two or more thereof. Advantageously, the sintering is performed in an atmosphere substantially consisting of argon.

Advantageously, the annealing 19 is performed at a temperature between 400 °C and 1250 °C, preferably between 500 °C and 1200 °C, more preferably between 600 °C and 1100 °C, such as between 700 °C and 1000 °C, or between 800 °C and 900 °C, for example about 900 °C.

Advantageously, the annealing step 19 is performed for a period of time between 1 minute and 1 hour, such as between 2 minutes and 45 minutes, preferably between 5 minutes and 30 minutes, more preferably between 10 minutes and 20 minutes, such as about 15 minutes.

The annealing is in particular performed shortly prior to contacting the multilayer solid state electrolyte with the cathode and/or the anode, in particular the anode. By doing so, a low interfacial resistance between the multilayer SSE and the electrode can be realised. A low interfacial resistance allows to obtain a battery cell showing or having a lower polarization, which is advantageous for the lifetime of the battery cell.

The inventors have noticed that by using the methods of the invention, the obtained dense layer(s) are substantially free from pinholes. With 'substantially free from pinholes' is meant that the surface area of the dense layer comprises less than 1% of pinholes. In other words, when a surface area is 100 µm², less than 1 µm² thereof consists of pinholes.

Advantageously, the thickness of the dense layer(s) in the multilayer SSE of the present disclosure is at least 5 µm, such as at least 8 µm or at least 10 µm, for example a thickness of about 20 µm, wherein the thickness of the dense layer is calculated from the SEM-images of the cross-section of the multilayer SSE. When the multilayer SSE comprises two or more dense layers, they can have the same or a different thickness.

Advantageously, the dense layer(s) have a thickness as low as possible while being substantially free from pinholes. It will be understood in the field that a lower thickness implies that smaller amounts of the first mixture can be used, leading to cost reductions. Further, a lower thickness allows to obtain battery cells comprising the SSEs of the present disclosure, wherein the battery cells have a lower thickness and a lower weight.

Advantageously, the porosity of the dense layer(s) in the multilayer solid state electrolyte of the present disclosure is 40 % or lower, preferably 35 % or lower, such as 30 % or lower, as measured by X-ray computed tomography. When the multilayer SSE comprises two or more dense layers, they can have the same or a different (degree of) porosity.

Advantageously, the thickness of the porous layer(s) in the multilayer solid state electrolyte of the present disclosure is between 30 µm and 75 µm, such as between 32 µm and 70 µm, between 35 µm and 65 µm, or between 40 µm and 60 µm, wherein the thickness of the dense layer is calculated from the SEM-images of the cross-section of the multilayer SSE. When the multilayer SSE comprises two or more porous layers, they can have the same or a different thickness. As known in the field, the thickness of the porous layer depends, amongst others, on the degree of porosity and the capacity of the cathode per surface area of the cathode.

Advantageously, the porosity of the porous layer(s) in the multilayer solid state electrolyte of the present disclosure is at least 40 %, preferably at least 45 %, such as at least 50 %, at least 55 %, more preferably at least 60 %, for example at least 65 %, at least 70 %, at least 75 %, or at least 80 %, as measured by X-ray computed tomography.

Advantageously, the pores comprised in the porous layer(s) have a pore size between 1 µm and 20 µm, such as between 2 µm and 10 µm, as measured by X-ray computed tomography. Advantageously, at least a portion, and preferably at least 50 %, such as at least 75 %, more preferably at least 90 %, or at least 95 %, of the pores comprised within the porous layer(s) are open-cell pores. Open-cell pores are pores that are open to at least one surface of the layer, and are thus accessible from outside the layer.

Figure 2 shows schematically a solid state battery cell 20 according to the present invention. The solid state battery cell 20 comprises a cathode 21, an anode 24 and a bilayer solid state electrolyte 27.

In the light of the present invention, the terms "battery cell" and "battery" are used interchangeably and have thus the same meaning.

Advantageously, the cathode 21 comprises a cathode current collector 22, for example an aluminium foil, and a cathode layer 23. The cathode layer 23 advantageously comprises a cathode active material, an electronically conductive compound, such as carbon black, and a binder. The cathode active material is advantageously ionic conductive. The cathode active material can be any cathode active material known in the field. Examples of cathode active materials for lithium-based battery cells include, without being limited thereto, lithium nickel cobalt manganese oxide (LiNiCoMnO₂, abbreviated as NMC), lithium iron phosphate (LiFePO₄, abbreviated as LFP), lithium nickel manganese spinel (LiNi_{0.5}Mn_{1.5}O₄, abbreviated as LNMO), lithium nickel cobalt aluminium oxide (LiNiCoAlO₂, abbreviated as NCA), lithium manganese oxide (LiMn₂O₄, abbreviated as LMO), and lithium cobalt oxide (LiCoO₂, abbreviated as LCO). The binder can be any binder known in the field, for example polyvinylidene fluoride (PVDF).

Advantageously, the anode 24 comprises an anode current collector 25, for example a copper foil, and a metallic layer 26 comprising an alkali metal and/or an alkaline earth metal. Examples of the alkali metal include lithium, sodium and potassium. Examples of the alkaline earth metal include magnesium, beryllium and calcium. A preferred example of the metallic layer 26 comprises, or substantially consists of lithium.

The bilayer solid state electrolyte 27 comprises one dense layer 28 and one porous layer 29. It will be understood that the bilayer SSE 27 can also be any multilayer SSE according to the present invention, comprising three layers or more.

Alternatively, the solid state battery can comprise a stack of multiple anodes, cathodes and multilayer solid state electrolytes. For example, the SSB can comprise an electronically insulating layer, which can be any electronically insulating layer known in the field, for example a polyethylene membrane or polypropylene foil. Applied to the electronically insulating layer there is an anode 24 comprising a first anode current collector 25 and a first layer of lithium metal 26, a first multilayer SSE 27, a first cathode layer 23, a first cathode current collector 22, a second cathode layer 23, a second multilayer SSE 27, a second lithium metal layer 26, a second anode current collector 25, a third lithium metal layer 26, a third multilayer SSE 27, a third cathode layer 23, a second cathode current collector 22, a fourth cathode layer 23, a third multilayer SSE 27, a fourth lithium metal layer 26 and a third anode current collector 25. The solid state battery can also comprise two or more of the foregoing stacks, wherein the stacks are electronically insulated from each other by the insulating layer.

### Examples

### Example 1

A reference bilayer solid state electrolyte comprising one dense layer and one porous layer was produced by tape-casting separately the dense layer and the porous layer. The mixture for the dense layer comprised LLZO. The mixture for the porous layer also comprised LLZO, and further comprises PMMA as pore-forming agent. Both layers were removed from their respective support, and were debinded separately at 650 °C for 2 hours, followed by sintering them together by placing them into contact (so-called co-sintering). Sintering was performed at a temperature between 1120 °C and 1150 °C for a 5 hours.

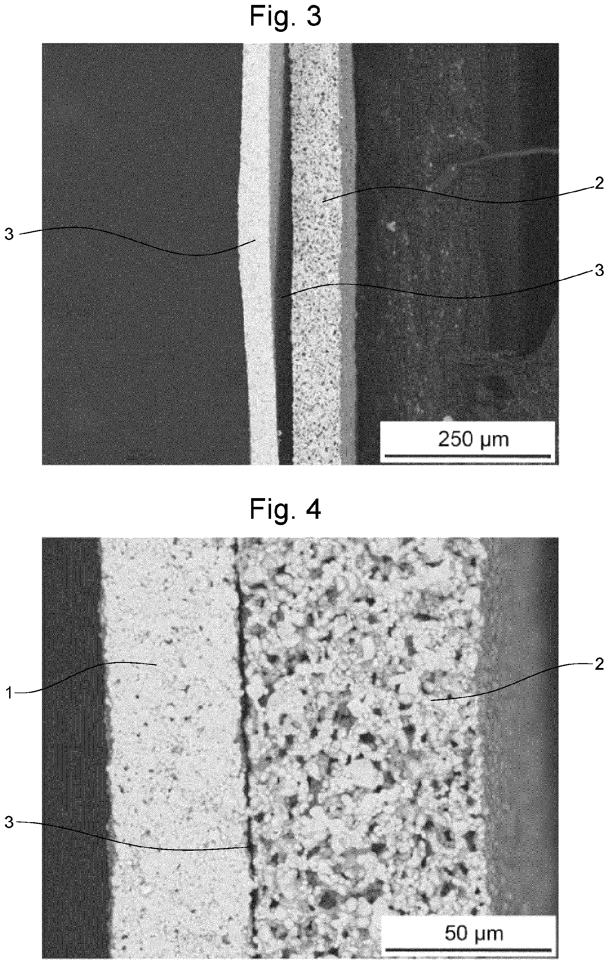

Figures 3 and 4 show SEM-images at different magnification of the cross-section of the resulting reference bilayer solid state electrolyte (SEM equipment: Hitachi TM3030Plus Tabletop microscope with an acceleration voltage of 10 kV). Clear delamination is visible in the form of gaps 3 between the dense layer 1 and the porous layer 2.

A bilayer solid state electrolyte comprising a dense layer and a porous layer was also manufactured according to the method of the present invention. A first mixture was prepared by mixing 3 g aluminium-doped LLZO, 0.15 g Li₂CO₃, 0.43 g surfactant, 0.408 mL plasticizer and 4.3 mL solvent comprising 5 vol.% isopropanol, 87 vol.% ethanol and 8 vol.% 1-propanol with a spatula, followed by ball milling for 18 hours at 165 rpm. A binder solution was prepared by adding 3 g polyvinyl butyral to 8.89 mL isopropanol. 1.83 g of the binder solution was added to the mixture (a suspension), followed by further ball milling for 2 hours at 200 rpm.

A second mixture was prepared by mixing 3 g aluminium-doped LLZO, 2.07 g PMMA as pore-forming compound, 0.15 g Li₂CO₃, 0.59 g surfactant, 0.56 mL plasticizer and 5.9 mL solvent comprising 5 vol.% isopropanol, 87 vol.% ethanol and 8 vol.% 1-propanol with a spatula, followed by ball milling for 18 hours at 165 rpm. A binder solution was prepared by adding 3 g polyvinyl butyral to 8.89 mL isopropanol. 2.51 g of the binder solution was added to the mixture (a suspension), followed by further ball milling for 2 hours at 200 rpm.

The first mixture was film-casted by tape-casting on a glass substrate. After 60 seconds, the second mixture was tape-casted onto the first mixture (i.e. sequential tape-casting). The obtained green structure was kept for 1 hour at ambient conditions to allow evaporation of the solvents, and was then removed from the glass substrate.

The green structure was then placed between two alumina plates. Debinding of the green structure was performed at 600 °C in air to completely remove the solvents (evaporation temperatures of at most 150 °C), the PMMA (at around 350 °C) and residual organic compounds, such as the binders and plasticizers (at approx. 600 °C). The debinded structure was then placed between two graphite foils, sandwiched between two carbon plates, and was sintered for 15 minutes at 1100 °C in a nitrogen atmosphere.

Afterwards, the sintered multilayer LLZO SSE was heated at 600 °C in air to remove any carbon-residue from the LLZO surface, followed by annealing for 1 hour in an argon-filled glovebox to remove any contamination originating from the presence of Li₂CO₃ or LiOH on the LLZO surface. The annealing was performed at three different temperatures, varying between 600 °C and 900 °C.

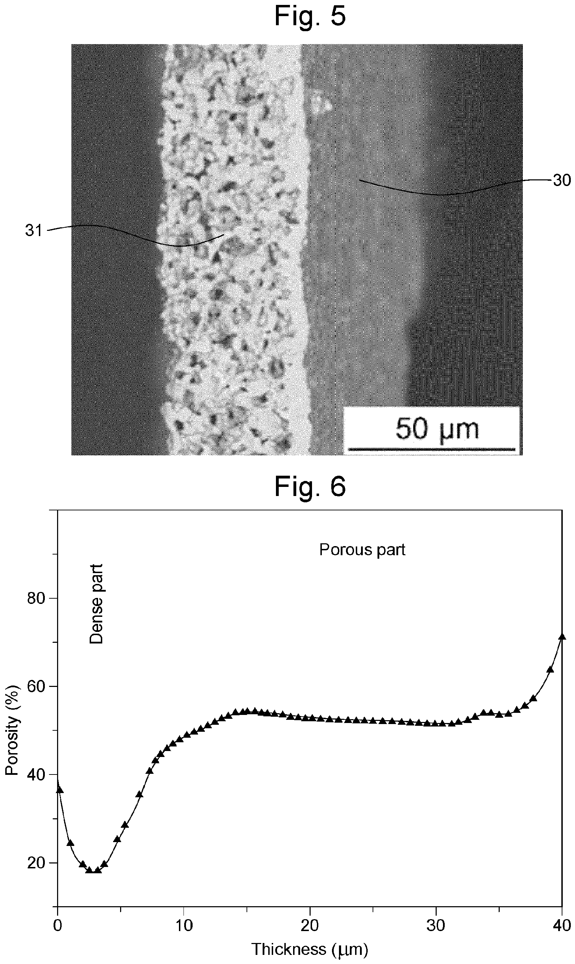

Figure 5 shows a SEM-image of the cross-section of the bilayer SSE obtained after annealing. The boundary between the dense layer 30 and the porous layer 31 is clear and no delamination of the layers 30, 31 is visible.

The degree of porosity was also measured throughout the sintered and annealed bilayer solid state electrolyte by means of X-ray computed tomography. An EasyTom XL Ultra 230-160 micro/nano-CT scanner was used, operating at 90 kV and at a current of 160 µA. The samples were scanned full 360° with a rotation step of 0.2° and frame average of 10. The nominal resolution was set at 850 nm voxel size. Figure 6 shows the porosity in function of the thickness thereof, starting from the dense layer as thickness 0. A clear difference in porosity between the dense layer and the porous layer is visible.

### Example 2

In order to study the impact of adding a carbonate of the alkali metal or alkaline earth metal to the first and/or second mixture, three mixtures for porous layers were prepared with varying amounts of Li₂CO₃. Mixture 1 comprised no Li₂CO₃, mixture 2 comprised 5 % by weight of Li₂CO₃, and mixture 3 comprised 10 % by weight of Li₂CO₃, wherein the % by weight are based on the total weight of the mixture.

Each mixture further comprised aluminium-doped LLZO, PMMA as pore-forming compound, a surfactant, a plasticizer in the amounts as described above. The composition and the amount of the solvent and the binder solution were also as described above. The mixtures were prepared as described above. Each mixture was then tape-casted on a glass support, dried, debinded and sintered as explained in example 1.

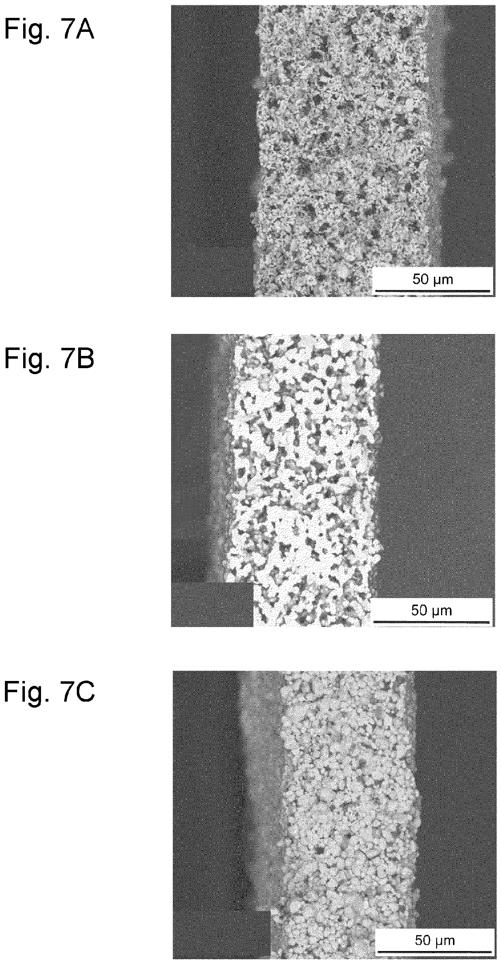

Figures 7A, 7B and 7C show the SEM-image of the cross-section of the three porous layers obtained from a mixture without any Li₂CO₃, 5 wt.% Li₂CO₃ and 10 wt.% Li₂CO₃, respectively. The porous layer without any Li₂CO₃ (Figure 7A) shows the presence of LZO instead of LLZO, as determined by X-ray diffraction (XRD) measurements. This indicates a significant loss of lithium during debinding. The porous layer of Figure 7B shows a good porosity, and the presence of cubic LLZO, as determined by XRD, whereas the layer of Figure 7C shows a low porosity and the presence of tetragonal LLZO, as determined by XRD. It is assumed that the reduction of porosity with increasing amount of Li₂CO₃ is related to the melting of the Li₂CO₃, which allows for initiating the sintering process at lower temperatures, resulting in a more dense layer. Hence, it is clear that the addition of Li₂CO₃ in the reaction mixture for the porous layer allows to modify the degree of porosity and the phase of the LLZO of the obtained porous layer.

### Example 3

To evaluate the electrochemical performance of the porous layer with respect to lithium plating/stripping, a symmetrical battery cell with a lithium metal anode and a lithium metal cathode, and a single porous layer were made. The porous layer was made by tape-casting the second mixture of example 1 onto a glass support, followed by drying, peeling off, debinding, sintering and annealing according to example 1. The symmetrical battery cell was made by thermal evaporation of 200 nm metallic lithium (using a Covap thermal evaporator) followed by cold isostatic pressing (using a PW 100 EH cold isostatic press) of the lithium foil onto the porous layer at ca. 71 MPa for 5 minutes on both sides of the porous LLZO layer. This allowed impregnation of the lithium up to approx. 10 µm into the porous layer. This corresponded to an areal capacity of approx. 1 mAh/cm².

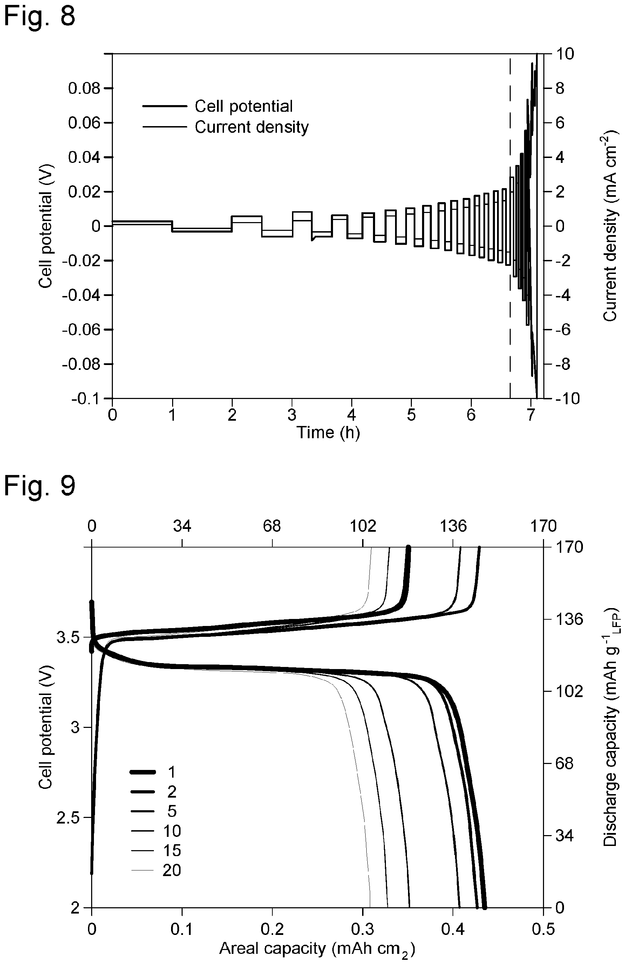

The achievable critical current density (CCD) of the symmetrical battery cell obtained from annealed LLZO, i.e. the current density at which the propagation of Li dendrites/filaments starts, was determined by galvanostatic cycling experiments at different current densities. The current density was increased from 0.1-1.5 mA/cm² with a step of 0.1 mA/cm², from 1.5-3 mA/cm² with a step of 0.5 mA/cm², and from 3-10 mA/cm² with a step of 1 mA/cm², transferring the same amount of Li for each half cycle (0.1 mAh/cm², i.e. the areal capacity limitation applied during the test). The tests were performed at 60 °C without applying any stack pressure. Figure 8 shows the results, indicating that the symmetrical cells with a single porous layer showed a high critical current density of up to 6 mA/cm².

The influence of the annealing step was also tested by measuring the critical current density of the symmetrical battery cell comprising LLZO SSE. annealed at different temperatures. Galvanostatic cycling experiments at different current densities were performed. A capacity limitation of 0.1 mAh/cm² was applied per half-cycle varying the respective current densities in the range of 0.04 - 0.4 mA/cm². . The tests were performed at room temperature without applying any stack pressure.

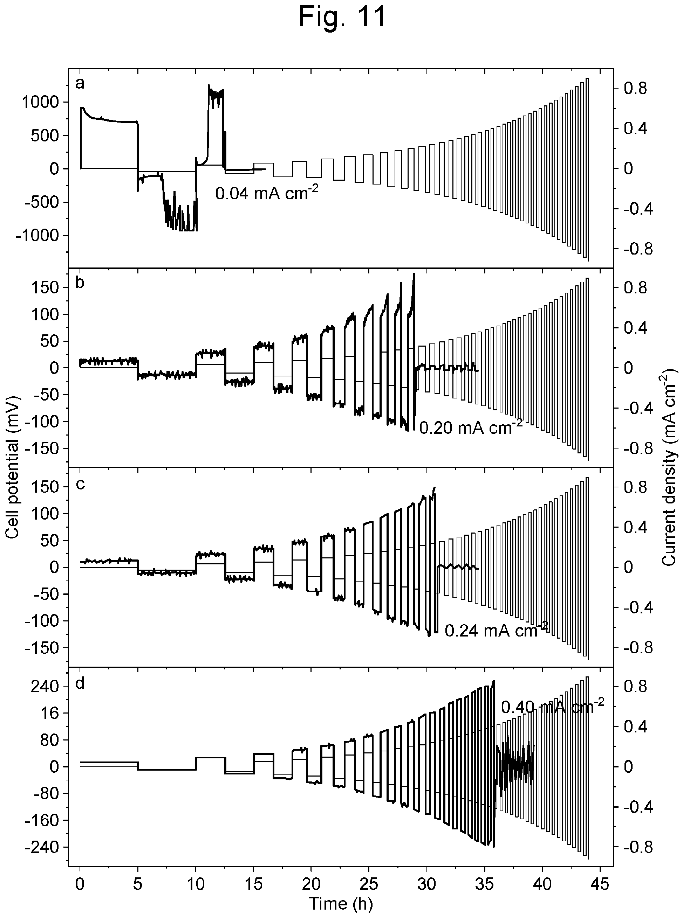

Figure 11 shows from top (a) to bottom (d) the results for a symmetrical battery cell comprising LLZO that was not annealed (a), and annealed for 1 hour at 600 °C (b), 750 °C (c) and 900 °C (d). The critical current density increases from 0.04 mA/cm² (no annealing) to 0.40 mA/cm² for annealing at 900 °C, clearly showing an increase in the critical current density with the increase in annealing temperature.

### Example 4

Battery cells were prepared using the bilayer SSE of example 1, made according to the invention. To apply the anode at the porous side of the SSE, 200 nm metallic lithium was evaporated on the porous side of the SSE, followed by cold isostatic pressing of lithium foil at approx. 71 MPa for 5 minutes. A paste-type LFP cathode was prepared by mixing 2 mg LiFePO₄ (LFP), 2 mg carbon black and 0.3M LiTFSI in 119 µl PY₁₄TFSI ionic liquid electrolyte in a mortar. The loading of active material in the paste-type LFP cathode obtained was approx. 3 mg/cm². A 20 µm thick cellulose separator membrane was placed at the dense side of the bilayer SSE, and was then covered with the paste-type LFP cathode and an aluminium foil as cathode current collector, thereby obtaining a Li/bilayer LLZO SSE/LFP battery cell.

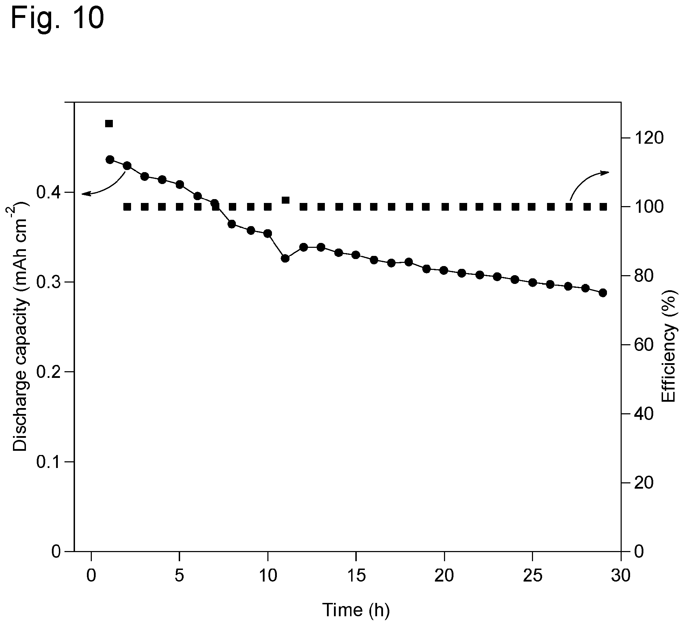

The battery cell was tested at room temperature and without applying external pressure. The applied currents were normalized to the surface area of the Li anode. All electrochemical measurements were performed using galvanostatic cycling within the voltage range of 2-4.2 V *vs.* Li+/Li. Figure 9 shows the voltage profiles of the battery cell measured at 0.1C rate as function of the number of testing cycles. Figure 10 shows the cycling stability measurement of the battery cell measured at 0.1C rate as function of the number of testing cycles. The battery cell delivered a capacity of LFP of ca. 100-150 mAh/g, which corresponds to an areal capacity of ca. 0.3-0.45 mAh/cm².

### Nomenclature

1. dense layer
2. porous layer
3. gap
10. preparing step -first mixture
11. preparing step - second mixture
12. film-casting first mixture
13. film-casting second mixture
14. removing from substrate
15. debinding
16. sintering
17. drying
18. exposing to air
19. annealing
20. solid state battery cell
21. cathode
22. cathode current collector
23. cathode layer
24. anode
25. anode current collector
26. metallic layer
27. multilayer solid state electrolyte
28. dense layer
29. porous layer
30. dense layer
31. porous layer

## Claims

1. A method for producing a multilayer solid state electrolyte (26) comprising alternating dense layers and porous layers, wherein the number of layers is at least two, the method comprising:
- adding (10) a first compound comprising one or more of an alkali metal and/or an alkaline earth metal and a first binder to a first solvent, thereby obtaining a first mixture,
- adding (11) a second compound comprising one or more of an alkali metal and/or an alkaline earth metal, a second binder, and a pore-forming compound to a second solvent, thereby obtaining a second mixture,
- film-casting (12) the first mixture, thereby obtaining a green layer,
- film-casting (13) the second mixture on the green layer, thereby obtaining a green structure,
- optionally, when number of layers is three or more, repeating the step of film-casting (12) the first mixture on the green structure and the step of film-casting (13) the second mixture on the green structure until the number of layers is obtained, thereby obtaining a green multilayer structure,
- debinding (15) the green structure or, when the number of layers is three or more, the green multilayer structure, thereby removing at least partially the first and second binder, the first and second solvent and the pore-forming compound, thereby obtaining a debinded multilayer structure comprising alternating dense layers and porous layers,
- sintering (16) the debinded multilayer structure comprising alternating dense layers and porous layers, thereby obtaining the multilayer solid state electrolyte (26) comprising alternating dense layers and porous layers.

2. Method according to claim 1, wherein the first and/or the second compound comprising one or more of an alkali metal and/or an alkaline earth metal comprises one or more of lithium, sodium or potassium.

3. Method according to claim 2, wherein the first and/or the second compound comprising one or more of an alkali metal and/or an alkaline earth metal comprises a lithium garnet-type structure.

4. Method according to claim 3, wherein the lithium garnet-type structure is lithium lanthanum zirconium oxide (LLZO).

5. Method according to any one of the preceding claims, wherein the first solvent and/or the second solvent comprises a polar solvent, preferably one or more of isopropanol, ethanol or 1-propanol.

6. Method according to any one of the preceding claims, wherein the second mixture comprises between 50 vol.% and 75 vol.% of the pore-forming compound.

7. Method according to any one of the preceding claims, wherein film-casting of the first mixture and/or the second mixture comprises tape-casting of the first mixture and/or the second mixture, respectively.

8. Method according to any one of the preceding claims, wherein the first and/or the second mixture further comprises between 0.1 % and 10 % by weight of one or more of a carbonate, an oxide, a tungsten oxide, or a zirconium oxide of an alkali metal or an alkaline earth metal, based on the total weight of the first and/or the second mixture, respectively.

9. Method according to any one of the preceding claims, wherein debinding (15) the green structure or, when the number of layers is three or more, the green multilayer structure, takes place in an atmosphere comprising at least 20 vol.% oxygen at a temperature between 250 °C and 800 °C, preferably between 400 °C and 700 °C.

10. Method according to any one of the preceding claims, wherein sintering (16) the debinded multilayer structure comprising alternating dense layers and porous layers takes place in an inert atmosphere at a temperature between 750 °C and 1400 °C, preferably between 900 °C and 1250 °C.

11. A multilayer solid state electrolyte (26) obtained by the method of any one of the preceding claims, comprising alternating dense layers and porous layers, wherein the number of layers is at least two, wherein each dense layer (27) comprises a first compound comprising one or more of an alkali metal and/or an alkaline earth metal and has a porosity of 40 % or lower, and wherein each porous layer (28) comprises a second compound comprising one or more of an alkali metal and/or an alkaline earth metal and has a porosity of at least 40%, wherein the porosity is measured by X-ray computed tomography.

12. A multilayer solid state electrolyte (26) according to claim 11, wherein the number of layers is three, wherein the multilayer solid state electrolyte (26) has a dense layer - porous layer - dense layer configuration.

13. A multilayer solid state electrolyte (26) according to any one of claims 11 to 12, wherein one or both of the first and second compound comprising one or more of an alkali metal and/or an alkaline earth metal comprises one or more of lithium, sodium or potassium.

14. A multilayer solid state electrolyte (26) according to claim 13, wherein the one or both of the first and second compound comprising one or more of an alkali metal and/or an alkaline earth metal comprises a lithium garnet-type structure, preferably LLZO.

15. A solid state battery (20) comprising a multilayer solid state electrolyte (26) according to any one of claims 11 to 14.
